# EUROPÄISCHE PATENTSCHRIFT

(11) **EP 1 809 556 B1**
(45) Veröffentlichungstag und Bekanntmachung des Hinweises auf die Patenterteilung: **16.12.2009**
(21) Anmeldenummer: 05790040.9
(22) Anmeldetag: 30.08.2005
(51) Int. Cl.: B65G 67/60

(54) **VORRICHTUNG ZUR OFFSHORE-SCHIFFSBELADUNG ODER -ENTLADUNG**
DEVICE FOR THE OFFSHORE LOADING AND UNLOADING OF SHIPS
DISPOSITIF POUR LE CHARGEMENT ET LE DECHARGEMENT DE BATEAUX EN MER

(30) Priorität: 11.11.2004 DE 102004054415
(43) Veröffentlichungstag der Anmeldung: 25.07.2007
(73) Patentinhaber: ThyssenKrupp Fördertechnik GmbH, 45143 Essen (DE)
(72) Erfinder: IGEL, Hanns-Jörg, 66440 Blieskastel (DE)
(74) Vertreter: Dahlkamp, Heinrich-Leo
(86) Internationale Anmeldenummer: PCT/EP2005/009308
(87) Internationale Veröffentlichungsnummer: WO 2006/053595

(56) Entgegenhaltungen:
- US-A- 5 613 820
- US-A1- 2004 126 205
- US-B1- 6 481 566

## Beschreibung

Die Erfindung betrifft eine Vorrichtung zur Offshore-Schiffsbeladung und/oder - Entladung.

Dem Ent- und Beladen von Schiffen kommt in Zeiten, in denen eine hohe Produktivität bei einem schnellen Güterumschlag gefordert wird, besondere Bedeutung zu. Zur Kostenminimierung sind insbesondere geringstmögliche Liegezeiten gewünscht, die nur bei hohen Schüttgutumschlaggeschwindigkeiten erreichbar sind.

Um die gewünschte Rentabilität zu erhalten oder zu verbessern, sind Frachtschiffe mit großer Ladekapazität entwickelt worden, die eine dementsprechende Größe besitzen. Zuweilen reicht die Wassertiefe der Liegeplätze in Häfen für den Tiefgang dieser Schiffe nicht aus oder es ist in der Nähe der Schüttgutlagerstätte kein Hafen vorhanden, weshalb sich als Alternative eine Offshore-Abfertigung anbietet. Die Offshore-Beladung eines Schiffes setzt allerdings voraus, dass im Abstand zur vorhandenen Küste eine Schiffs-Anlegestelle und eine entsprechende Trageinrichtung für Fördergeräte vorhanden sind. In der Vergangenheit sind hierzu küstennahe Schiffsanlege-Piers geschaffen worden, die aus massiven Beton-Plattformen bestanden, auf denen schienengebundene oder Reifenfahrwerke bewegt werden können. Diese massiven Betonplattformen sind normalerweise auf Pfahlgründungen abgestützt.

Die geschilderten Offshore-Anlagen haben den Nachteil, dass sie sowohl vom Aufbau her als auch in ihrer Herstellung relativ teuer sind, zumal die Betonierarbeiten weitestgehend vor Ort, d. h. offshore durchgeführt werden müssen. Auch die Vielzahl der erforderlichen Pfahlgründungen ist teuer.

Aus der US 2004/126 205 A1 ist ein Transportsystem für Frachtcontainer beschrieben, bei dem ein Ausleger fest an einem Stahlträger angeordnet ist. Das ist für die Behandlung von Schütgut häufig nicht flexibel genug.

Es ist Aufgabe der vorliegenden Erfindung, eine Vorrichtung zur Offshore-Schiffsbeladung oder -Entladung zu schaffen, mit der die vorgenannten Nachteile beseitigt werden.

Diese Aufgabe wird durch die Vorrichtung nach Anspruch 1 gelöst, die eine als Mehrfeldträger mit großer Spannweite ausgebildete Stahlbrücke aufweist, die auf den Kopfstücken (vorzugsweise Betonköpfen) weniger einzelner Pfahlgründungen gelagert ist und auf der ein oder mehrere Schiffsbelader oder Schiffsentlader längsverfahrbar angeordnet ist/sind, an denen jeweils mindestens ein Ausleger bewegbar ist.

Jede Pfahlgründung besteht dabei aus einer Gruppe von mehreren geeignet angeordneten Einzelpfählen, die in den Seeboden gerammt und deren obere Enden oberhalb der Wasserlinie mittels eines Kopfstücks aus z.B. Beton verbunden sind. Vorzugsweise ist die Stahlbrücke als Mehrfeldträger mit großer Spannweite ausgebildet, in einer Fachwerkbauweise. Die Stahlbrücke, selbst wenn sie als Vollwand oder Kastenträger ausgestaltet ist, bietet insbesondere Kostenvorteile. Die Stahlbrücke kann entweder als Ganzes oder in wenigen Teilen leicht vor Ort gebracht und gegebenenfalls dort zu einer Brücke mit großer Spannweite verbunden werden. Diese Brücke dient gleichermaßen als Schiffsanlege-Pier und als Tragvorrichtung sowohl für den darauf längs verfahrbaren Schiffsbelader bzw. -Entlader als auch für den über die gesamte Brückenlänge sich erstreckenden Piergurtförderer. Bei gleicher Belastbarkeit sind Mehrfeldträger-Stahlbrücken z.B. als Biegebalken mit großem Abstand zwischen Ober- und Untergurt, also als Balken mit großer Höhe wesentlichen leichter und mit wesentlich größeren Stützweiten baubar als Beton- oder Stahlbetonbrücken. Daher kann hier auch die Zahl der Pfahlgründungen erheblich reduziert werden, womit eine weitere Kosteneinsparung erzielt wird. Die Stahlbrücke kann derart ausgebildet werden, dass deren Obergurt gegenüber dem Wasserspiegel ohne größeren Aufwand höher als bei Betonmassivbauten angeordnet werden kann, so dass das Portal des Schiffsbe- oder Entladers mit entsprechendem Ausleger niedrig ausführbar ist. Dies bietet wiederum den Vorteil geringer Radlasten aus Windkräften.

Grundsätzlich kann auf einer solchen Brücke sowohl ein Schiffsbelader als auch ein Schiffsentlader angeordnet werden, im Folgenden wird jedoch nur der Schiffsbelader im Einzelnen beschrieben. Der Schiffsbelader kann insbesondere ein Koordinatengerät mit einem Ausleger sein, der von einem in sich steifen, geraden horizontalen Balken gebildet wird, welcher quer zur Längsachse des zu beladenden Schiffes und der eigenen Gerätefahrbahn verschiebbar und dazu zumindest an seiner Ober- und Unterseite zwischen Tragrollen geführt ist. Die Bezeichnung Koordinatengerät rührt daher, das sich die Auslegerspitze (der Abwurfkopf) durch Längsverfahren des Schiffsbeladers auf der Stahlbrücke in der einen Richtung bewegen lässt und in der anderen, hierzu senkrechten Koordinate durch Herausfahren oder Einfahren des Auslegers veränderbar ist. Auf diese Weise lässt sich mit der Auslegerspitze jeder Punkt oberhalb aller offenen Schiffsiadeluken ansteuern.

Vorzugsweise besitzt der Ausleger ein längsbewegbares, d.h. verschieb- oder verschwenkbares Gegengewicht, das insbesondere auf Rollen oder Rädern gelagert sein kann und durch Ritzel, die unterschiedliche Durchmesser besitzen, auf einer gemeinsamen Welle angeordnet sind und die jeweils in Zahnstangen oder Triebstöcke eingreifen, gegenläufig zur Auslegerfahrtrichtung bewegbar ist. Das Verhältnis der Ritzeldurchmesser bestimmt den gegenseitigen Verschiebeweg des Gewichtes relativ zum Fahrweg des Auslegers, so dass bei einem Ausfahren des Auslegers in entsprechendem Verhältnis das Gegengewicht in entgegengesetzter Richtung ausgefahren wird. Neben der beschriebenen Lösung eines mechanischen Zwangsantriebes durch Ritzel und Zahnstange oder dergleichen, die robust und im rauen Seebetrieb funktionssicher ist, kann das Gegengewicht auch durch zusätzliche elektrische, hydraulische, pneumatische oder sonstige mechanische Hilfsmittel bewegt werden, welche dann allerdings wegen ihrer erforderlichen separaten Überwachung, Steuerung und Antriebselemente zusätzlichen Aufwand erfordern gegenüber der mechanischen Zwangskopplung der Bewegungen.

Weiterhin vorzugsweise besitzt der Ausleger des Schiffsbeladers an seinem vorderen freien Ende eine in vertikaler Richtung einziehbare Beladeschurre, die vorzugsweise aus einer Kopfschurre, einem teleskopierbaren Fallrohr und einem Führungsgerüst besteht, das weiterhin vorzugsweise innerhalb eines Pylons aufgenommen ist. Eventuell können zusätzlich noch Trimmeinrichtungen für das untere Ende des Fallrohrs vorgesehen sein. Der Pylon ist mit Hubeinrichtungen ausgestattet, mit denen die Beladeschurre und das Führungsgerüst nach oben eingezogen werden können, damit die Beladeschurre in eine Lage geführt werden kann, bei der sie oberhalb des Schiffslukenrands horizontal verschiebbar ist, etwa, um die Beladeschurre aus einem Schiffsladeraum heraus- und in den nächsten Schiffsladeraum hinein zu bewegen. Dazu ist das Führungsgerüst innerhalb des Pylons heb- und senkbar, wobei die Beladeschurre beim Anheben des Führungsgerüsts stückweise und teleskopartig ineinander verschiebbar ist. Anstelle eines teleskopierbaren aus zylindrischen Elementen bestehenden Fallrohrs können auch trichterförmige Elemente angeordnet werden, die in gerader Linie oder kaskadenförmig teleskopierbar übereinander angeordnet sind.

Die Kopfschurre besitzt weiterhin vorzugsweise einen trichterförmigen Einlaufbereich, eine Abdeckung, innere Leit- und Pralleinrichtungen und eine Öffnung zum seitlichen Aufgeben des Fördergutes, das auf dem Ausleger vorzugsweise über einen Gurtförderer transportiert wird. Dieser Gurtförderer kann am Kopfende eine Abwurftrommel besitzen, die aus dem Bereich der Kopfschurre ausschwenkbar oder wegziehbar ist. Die bereits erwähnten Leit- und Pralleinrichtungen sind auswechselbare Verschleißteile gerader oder gebogener Kontur.

Als Schiffsbelader kann alternativ auch ein solcher mit einem um eine senkrechte Achse horizontal schwenkbaren Oberbau mit Ausleger verwendet werden. Die Auslegerspitze beschreibt dabei einen Teilkreisbogen, wobei - bei entsprechender Auslegerlänge - in Verbindung mit der Längsverfahrbarkeit des Schiffsbeladers ebenfalls jeder Punkt oberhalb jeder Schiffsladeluke ansteuerbar ist.

Vorzugsweise ist der Ausleger als Knickarmausleger ausgestaltet, der um eine horizontale Achse schwenkbar ist, die im Bereich der dem Schiffsbelader zugewandten Schiffswand liegt. Diese Ausführungsform gestattet eine starke Neigung des vorderen Auslegerarmteils, so dass die dort angeordnete Schurre tief in den Schiffsraum eintauchen kann, womit sich die Fallhöhe des Ladegutes minimieren lässt. Unerwünschte Kornbeschädigung bei stückigem Fördergut aufgrund ansonsten größerer Fallhöhe oder starke Staubentwicklungen bei pulverförmigen Schüttgütern lassen sich somit weitgehend vermeiden. Um in dem Übergangsbereich zwischen den zwei gelenkig miteinander verbundenen Auslegerteilen ein zu starkes Abknicken des dortigen Gurtförderers zu verhindern, ist vorgesehen, den Gurtförderer im Bereich der horizontalen Schwenkachse mittels eines Gurtbahnbogens zu stützen, der aus mehreren gegeneinander beweglichen, schwenkbaren und verschiebbaren Einzelsegmenten besteht. Im Gegensatz zu den beispielsweise aus der DE 100 02 018 C2 bekannten Federbögen, die schwer herstellbar, sperrig und auch teuer sind, lässt sich durch die beweglichen Elemente eine konstruktiv und kostenmäßig vorteilhafte Gurtauflagebahn schaffen, bei der unzulässig starke Krümmungsradien vermieden werden.

Die Beladeschurre, die endseitig des Knickarm-Auslegers angeordnet ist, kann unten am Auslaufende mit einer Trimmeinrichtung zur seitlichen Ablenkung des Ladegutes versehen sein, womit sich eine weitgehend ebene Ladegutoberfläche im Schiffsraum und damit ein optimaler Füllgrad des Schüttguts erzeugen lässt. Insbesondere ist die optimale Trimmung des Schiffes bzw. eine Minimierung der Gefahr von Ladegutverschiebungen bei schwerem Seegang möglich.

Vorzugsweise kann die Schurre auch über einen Parallelogrammlenker senkrecht geführt bzw. gehalten werden.

Zur Zuführung des Fördergutes zum Schiffsbelader dienen ein vom Land kommender Gurtförderer, ein Pier-Gurtförderer und ein Bahnschleifenwagen, von dem das Schüttgut auf den Schiffsbelader bzw. den dort angeordneten Gurtförderer übergeben wird. Der Bandschleifenwagen kann in den Schiffsbelader integriert sein.

Die Kopfstücke der Pfahlgründungen bestehen entweder aus Beton oder aus Stahl, je nach dem Aufbau der Pfahlgründungen und den notwendigerweise zu berücksichtigenden auftretenden Kräfte, u.a. aus Traglasten.

Insgesamt lässt sich mit der erfindungsgemäßen Vorrichtung eine besonders kostengünstige Lösung für eine Schiffsbe- oder Entladeeinrichtung realisieren. Dies wird erreicht - im Gegensatz zum Stand der Technik solcher Einrichtungen - durch:
- Leichtbau und unaufwendige Erstellung der Brücke vor Ort
- Einfachen Aufbau des Schiffbeladers und geringe Ausladung des Auslegers im Vergleich zu den im Offshore-Bereich üblichen Radialbeladern mit Vorschubwagen
- Wegfall von Gründungen und Aufständerungen für - bei üblichen Radialbeladern erforderliche separate Schiffsanleger und Radialfahrbahn, separates Brückenschwenklager, Fördergurtverteilstation zwischen Twin-Beladern, Fahr- und Laufstege zwischen Pier, Radialfahrbahn, Verteilerstation etc.

Weitere Vorteile und Ausführungsbeispiele der vorliegenden Erfindung werden im Folgenden anhand der Zeichnungen erörtert. Es zeigen:
- Fig. 1 bis 3: jeweils unterschiedliche Ansichten einer Prinzipskizze einer erfindungsgemäßen Vorrichtung,
- Fig. 4: eine Prinzipskizze eines Gurtbahnträgers im Knickbereich eines Auslegers,
- Fig. 5: eine Prinzipansicht einer Parallelogrammlenkerführung für eine Aufgabeschurre,
- Fig. 6: eine Prinzipskizze eines horizontal führbaren Auslegers mit einer vertikal einziehbaren Beladeschurre,
- Fig. 6a bis 6c: Detailansichten des Kopfbereiches der Beladeschurre,
- Fig. 7: eine Ansicht entsprechend Fig. 6 mit eingezogener Beladeschurre,
- Fig. 8 und 9: jeweils unterschiedliche Ansichten eines Ritzel/Zahnstangenantriebs für einen horizontal beweglichen Ausleger,
- Fig. 10a und 10b: Prinzipskizzen unterschiedlicher Schurrenteile,
- Fig. 11: eine Prinzipskizze eines Pylons am Auslegerkopf zur Aufnahme der Beladeschurre mit Führungsgerüst,
- Fig. 12a: eine Prinzipskizze der teleskopierbaren Beladeschurre mit Führungsgerüst,
- Fig. 12b: eine Seitenansicht des unteren Teils von Fig. 12a.

Es ist grundsätzlich bekannt, dass die Kosten einer großen Offshore-Schiffsbeladungs- oder Schiffsentladungseinrichtung nicht allein durch das Schiffsbelade- oder Entladegerät, sondern oft weit überwiegend in den vor Ort zu errichtenden Baulichkeiten entstehen. Hierzu gehören insbesondere die lang gestreckte Schiffsanlegestelle mit deren Verzurreinrichtungen und Fendern, die Gründung, Aufständerung und die Fahrbahn für das Umschlaggerät, bei nach dem Stand der Technik u.a. bekannten Radialbeladern die Gründung und Aufständerung der Schwenklagerung dieses Umschlaggerätes sowie eventuell bei in Twin-Bauweise ausgeführten Schwenkbeladern die Gründung und Aufständerung der separat zwischen diesen stehenden Schüttgut-Verteilstationen vom ankommenden Hauptzuförderer zu den beiden Beladern und die Gründung und Aufständerung der Park- und Wartungsplattform und der verbindenden Fahr- bzw. Laufwege (Wartungs-und Transportwege) zwischen Verteilstation, Park- und Wartungsplattform und Schiffsanlegern. Die Zielsetzung der vorliegenden Erfindung besteht darin, eine Offshore-Schiffsbeladeeinrichtung zu schaffen, die mit geringerem technischen Aufwand gebaut werden kann und kostengünstiger ist.

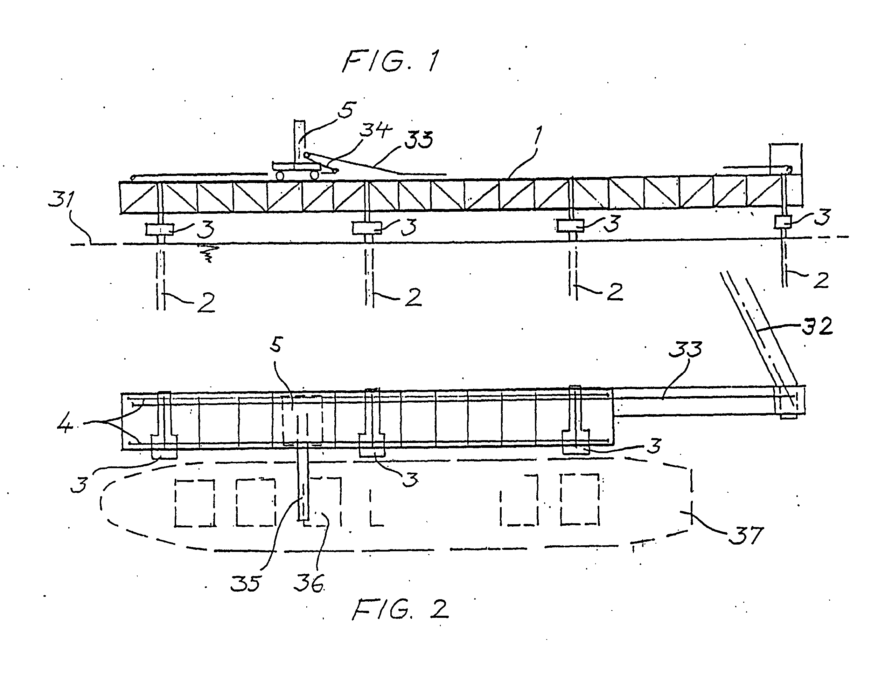

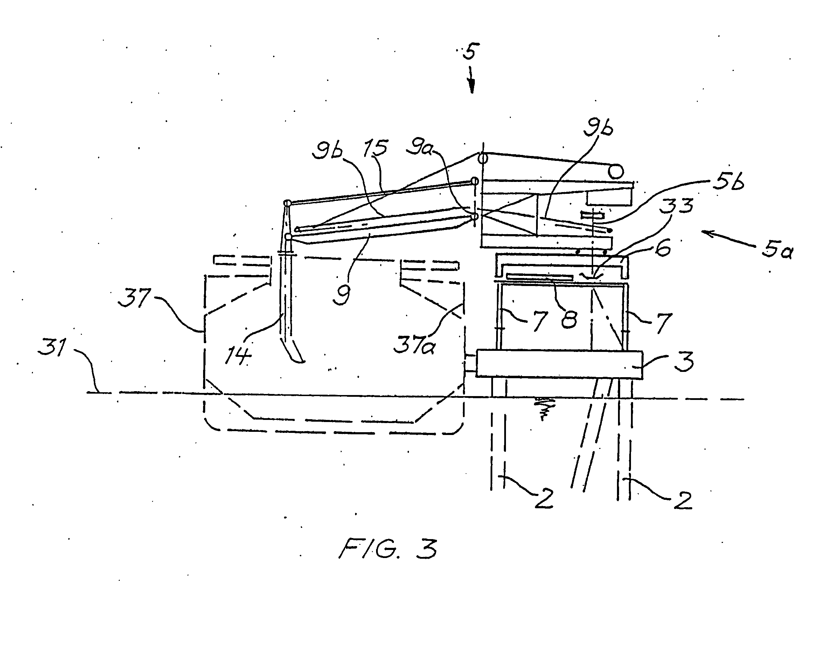

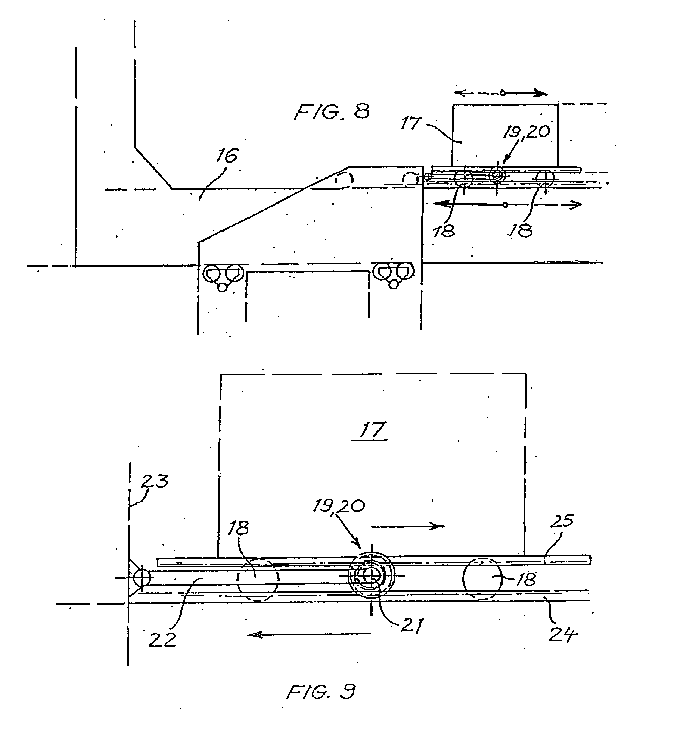

Wie aus Fig. 1 bis 3 ersichtlich, besteht die Offshore-Schiffsbeladeeinheit aus einer Stahlbrücke 1, die auf den Betonköpfen 3 einzelner Pfahlgründungen 2 angeordnet ist. Auf dieser Stahlbrücke 1 ist ein Schiffsbelader 5 entlang der Schienenfahrbahn 4 längs verfahrbar angeordnet. Der Schiffsbelader 5 ist mit einem niedrigen Portal 6 bzw. 23 (siehe Fig. 3 bzw. Fig. 9) ausgeführt, was möglich ist, da der Obergurt der Stahlbrücke 1 relativ hoch gegenüber dem Wasserspiegel 31 angeordnet werden kann. Durch diese "Niedrigbauweise" ergeben sich aus Wind niedrige zusätzliche Radlasten. Der Vollständigkeit halber sind noch der von Land kommende Gurtförderer 32, der Piergutförderer 33 und ein Bandschleifenwagen 34, mittels dessen das Schüttgut auf den Schiffsbelader 5 übergeben wird, eingezeichnet.

Der in Fig. 2 mit 35 bezeichnete Ausleger kann verschiedenartig ausgestaltet werden, wobei jedoch stets gewährleistet ist, dass der Ausleger 35 - mit einem gewissen Sicherheitsabstand zum Lukenrand - jeden Punkt oberhalb bzw. innerhalb der Ladeluke 36 des Schiffes 37 erreicht. Ferner ist Fig. 3 noch zu entnehmen, dass zwischen den Brücken-Hauptträgern 7 ober- oder unterhalb des Brückenobergurtes eine fahrbare Wartungs- und Transportplattform 8 angeordnet ist.

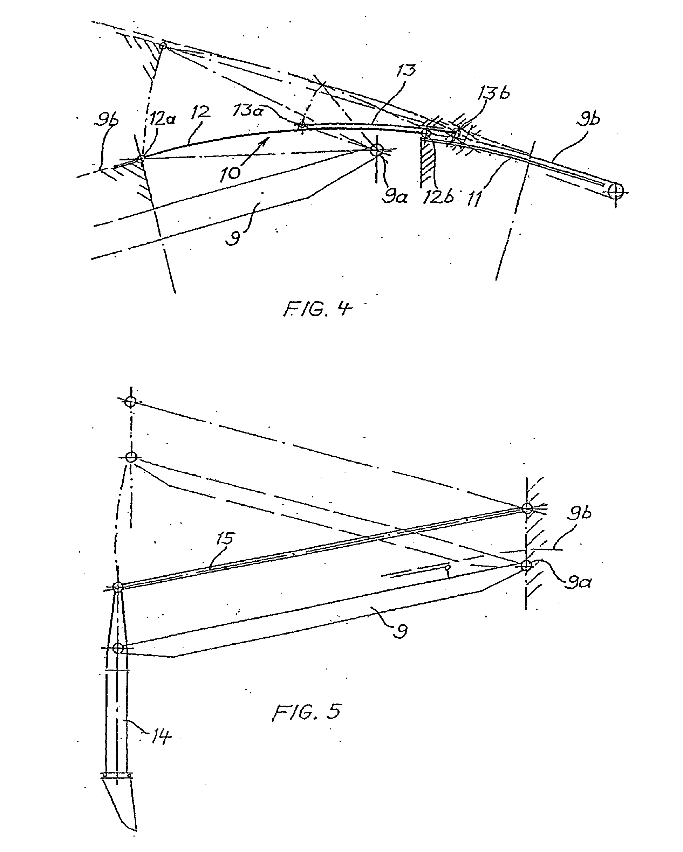

Der in Fig. 3 dargestellte Schiffsbelader besitzt einen um eine senkrechte Achse 5b horizontal schwenkbaren Oberbau 5a mit Ausleger, der als Knickgelenkausleger 9 ausgebildet ist, der um die Horizontalachse 9a wippbar ist. Um die Krümmungsradien, welche der Gurt 9b im Bereich oberhalb der Achse 9a erfährt, mit Rücksicht auf die zulässigen Randspannungen im Gurt möglichst groß zu halten, ist ein Gurtbahnbogen 10 gemäß Fig. 4 geschaffen worden, der aus einem hinteren fest angeordneten Segment 11, einem vorderen gelenkig angeordneten Segment 12 und einem mittleren Segment 13 besteht. Alle Segmente 11,12 und 13 sind in sich steif, wobei das in Fig. 4 dargestellte linksseitige Ende des Segmentes 12 um eine horizontale Achse 12a schwenkbar am Ausleger 9 befestigt ist, während das andere Ende im dem Ausleger zugewandten Bereich des Segmentes 11 um eine horizontale Achse 12b sowohl schwenkbar als auch etwa tangential zur dortigen Stützkontur des Segmentes 11 verschiebbar gelagert ist. Das Segment 13 ist mit seinem einen Ende um eine horizontale Achse 13a schwenkbar am Segment 12 befestigt und mit seinem anderen Ende ebenfalls in dem dem Ausleger 9 zugewandten Bereich des Segmentes 11 sowohl um eine horizontale Achse 13b schwenkbar als auch etwa der Kontur des Segmentes 11 folgend verschiebbar gelagert. Die gemäß Fig. 4 gewählte Abstützung hat gegenüber einstückig gebauten federnden Elementen, wie sie beispielsweise aus der DE 100 02 018 A1 bekannt sind, den Vorteil, dass sie bei der für einen ausreichend großen Biegeradius erforderlichen Länge einfacher herstellbar und wesentlich billiger ist.

Fig. 5 zeigt in vergrößerter Darstellung die Führung mittels eines Parallelogrammlenkers 15, der die Beladeschurre 14 unabhängig vom vertikalen Schwenkwinkel (Wippwinkel) des Auslegers 9 senkrecht hält. Die horizontale Achse 9a, um die der Ausleger wippbar ist, liegt zwischen der Vertikalebene, die durch die Schiffswand 37a gebildet wird und der Vertikalebene des schiffszugewandten Teils der Stahlbrücke 1. Diese Wippachsenanordnung erlaubt insbesondere bei unbeladenem oder wenig beladenem Schiff eine starke Neigung des Auslegers 9, womit ein tiefes Eintauchen der Schurre 14 in den Schiffsraum ermöglicht wird.

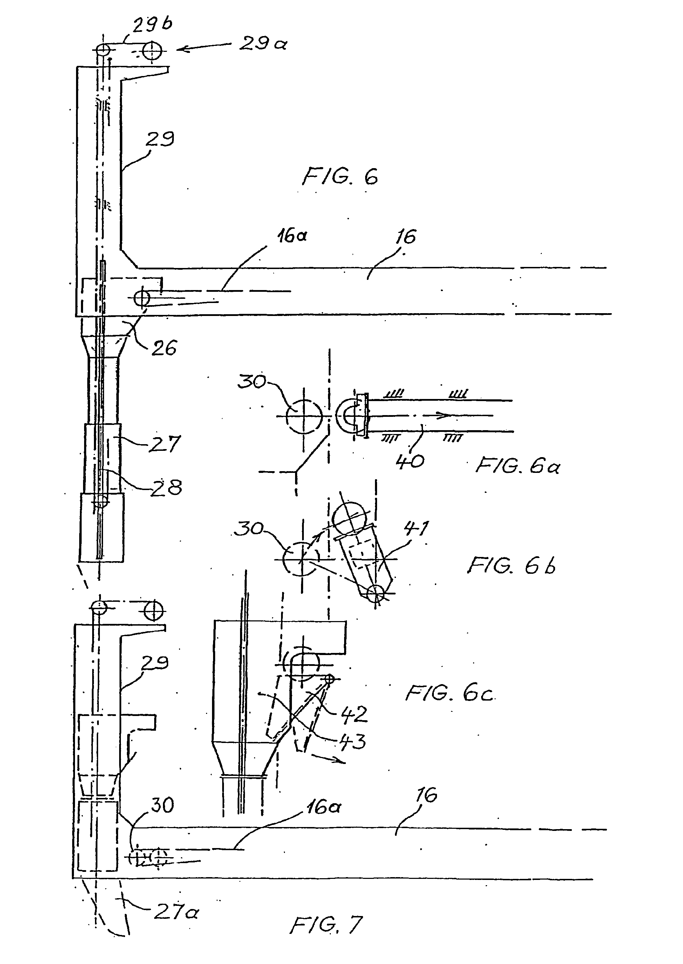

Die in Fig. 6 bis 8 dargestellte Variante zeigt einen Schiffsbelader 5, der einen horizontal und quer zur Gerätefahrbahn und der Schiffslängsachse beweglichen Ausleger 16 mit einem Gurtförderer 16a besitzt. Der Schwerpunktausgleich des horizontal entlang seiner Längsachse verschiebbaren Auslegers 16 wird mittels des Gegengewichtes 17 geschaffen, das verschiebbar (oder gegebenenfalls auch verschwenkbar) am Ausleger 16 angeordnet ist.

Die in Fig. 8 und 9 dargestellte Ausführungsform zeigt zwei auf einer gemeinsamen Welle 21 angeordnete Ritzel 19, 20, die in Zahnstangen 24 und 25 eingreifen. Die Zahnstange 24 ist am Ausleger 16 befestigt, die Zahnstange 25 am Gegengewicht 17. Das Gegengewicht 17 ist auf Rollen 18 gelagert. Die gemeinsame Welle 21 befindet sich vorzugsweise (zur Vermeidung von Zwängungen) auf einer Schwinge 22, die am Portal 23 angelenkt ist. Der Verschiebeweg des Gegenwichts 17 relativ zum Fahrweg des Auslegers 16 wird durch das Verhältnis der Durchmesser der beiden Ritzel 19, 20 bestimmt. Das Gegengewicht 17 wird dabei gegenläufig zum Ausleger 16 verschoben.

Der Ausleger 16 besitzt an seinem dem Schiff zugewandten Ende eine nach oben "einziehbare" Beladeschurre, die aus einer Kopfschurre 26 einem teleskopierbaren Fallrohr 27 (versehen mit einer Trimmeinrichtung 27a) sowie einem Führungsgerüst 28 zum Einziehen der Beladeschurre besteht. Das Führungsgerüst 28 ist innerhalb eines Pylons 29 geführt. Um von der in Fig. 6 dargestellten Lage der Beladeschurre in die Fig. 7 entnehmbare Position zu gelangen, ist es erforderlich, den Hubweg an der Kopfseite des Auslegers 16 frei zu machen, wo sich die Abwurftrommel 30 des Gurtförderers 16a befindet, die gemäß Fig. 6a/6b oder 6c mittels eines Schieberahmens 40 nach hinten verschoben wird (Fig. 6a) oder eines Schwenkrahmens 41 seitlich oder nach oben verschwenkt wird oder alternativ fest angeordnet ist, wobei das hintere Schurrenunterteil 42 unter Berücksichtigung der Störkanten der einzuziehenden Schurre vom vorderen Teil 43 getrennt und feststehend oder, wie dargestellt, klappbar ausgebildet ist.

Statt eines teleskopierbaren Fallrohrs 27 können auch ineinanderschiebbare, an Ketten oder Bändern aufgehängte Trichter 38 (Trichter in Trichter-Prinzip) oder auch kaskadenartig angeordnete Schurrentrichter 39 verwendet werden.

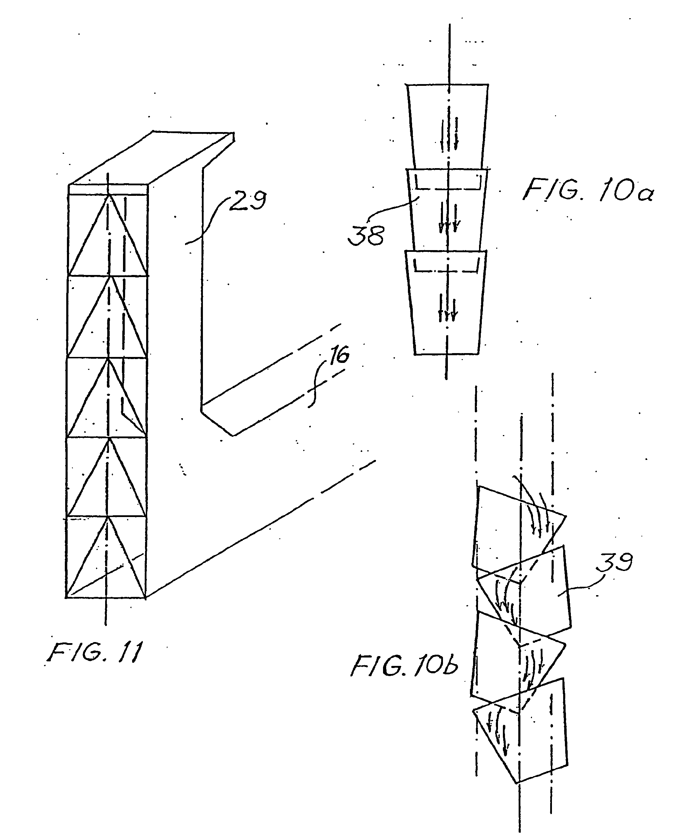

Fig. 11 zeigt, dass sowohl der Ausleger 16 als auch der Pylon 29, der mit einer Hubeinrichtung 29a zum Einziehen der Beladeschurre dient, beispielsweise in einer Vollwandbauweise mit Querverbänden aus Fachwerk ausgeführt werden können. (Auch eine reine Fachwerkbauweise ist möglich und fallweise sinnvoll).

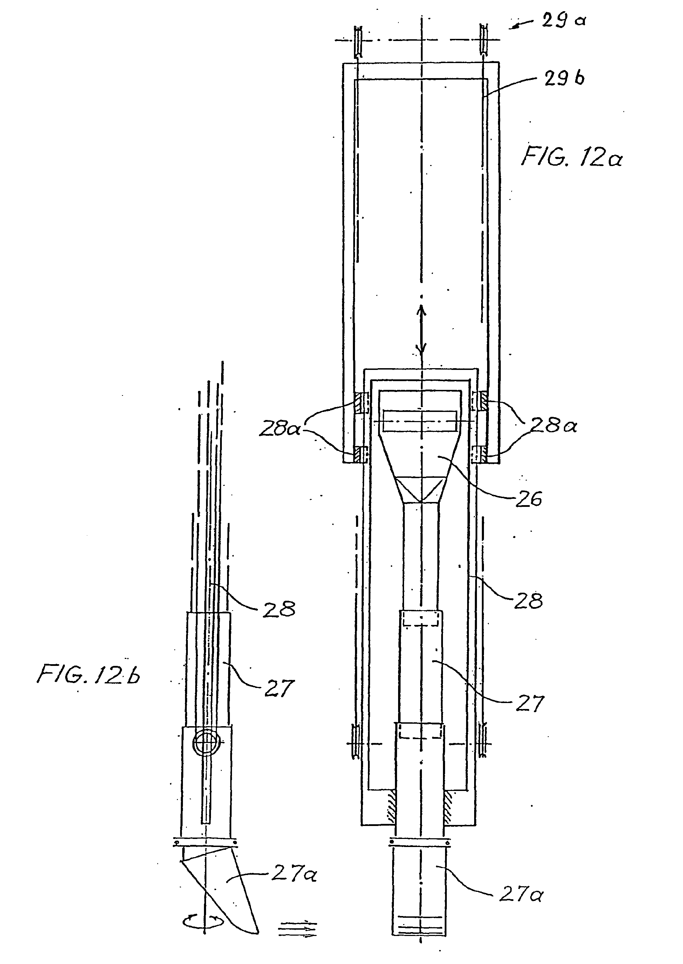

Fig. 12a ist eine stirnseitige Ansicht (von links) auf den Pylon 29 und die Beladeschurre nach Fig. 6. Sie zeigt schematisch die Trimmeinrichtung 27a, deren Befestigung am unteren Teil (Schuss) des Teleskopfallrohrs 27, seinerseits befestigt am Führungsgerüst 28, die Kopfschurre 26 und eine Führungslagerung 28a des Führungsgerätes 28 im Pylon 29. Desweiteren ist eine die Hubeinrichtung 29a mit Hubseilen 29b, die mit dem Führungsgerüst 28 verbunden ist, dargestellt.

Fig. 12b ist eine seitliche Ansicht auf den unteren Teil von Fig. 12a.

## Patentansprüche

1. Vorrichtung zur Offshore-Schiffsbeladung und/oder entladung von Schüttgütern mit einer als Mehrfeldträger mit großer Spannweite ausgebildeten Stahlbrücke (1), die auf den Kopfstücken (3) einzelner Pfahlgründungen (2) gelagert ist und auf der Stahlbrücke (1) längsverfahrbar angeordneten ein oder mehreren Schiffsbe- und/oder -entladern (5), an denen jeweils mindestens ein Ausleger (9,16,35) bewegbar ist.

2. Vorrichtung nach Anspruch 1, **dadurch gekennzeichnet, dass** die Stahlbrücke (1) in einer Fachwerkbauweise ausgebildet ist.

3. Vorrichtung nach Anspruch 1 oder 2, **dadurch gekennzeichnet, dass** der Schiffsbe- und oder -entlader ein Koordinatengerät mit einem Ausleger (16, 35) ist, der quer zur Längsachse des zu beladenen Schiffes (37) und auf der auf der Stahlbrücke befindlichen Fahrbahn bewegbar ist.

4. Vorrichtung nach Anspruch 3, **dadurch gekennzeichnet, dass** der Ausleger (16) ein längsbewegbares Gegengewicht (17) aufweist.

5. Vorrichtung nach Anspruch 4, **dadurch gekennzeichnet, dass** das Gegengewicht (17) auf Rollen (18) gelagert ist und durch Ritzel (19, 20), die unterschiedliche Durchmesser besitzen, auf einer gemeinsamen Welle (21) angeordnet sind und die jeweils in eine Zahnstange oder dergleichen (24, 25) eingreifen, zusammen mit dem Ausleger in gegenläufigen Richtungen bewegbar ist.

6. Vorrichtung nach einem der Ansprüche 3 bis 5, **dadurch gekennzeichnet, dass** der Ausleger (16) des Schiffsbeladers (5) an einem freien Ende eine in vertikaler Richtung einziehbare Beladeschurre aufweist, die vorzugsweise aus einer Kopfschurre (26), einem teleskopierbaren Fallrohr (27) oder dergleichen und einem Führungsgerüst (28) besteht, das weiterhin vorzugsweise innerhalb eines Pylons (29) aufgenommen ist.

7. Vorrichtung nach Anspruch 6, **dadurch gekennzeichnet, dass** die Kopfschurre (26) einen trichterförmigen Einlaufbereich, eine Abdeckung, innere Leit- und Pralleinrichtungen und eine Öffnung zur seitlichen Zuführung des Fördergutes besitzt, das vorzugsweise über einen Gurtförderer (16a) transportiert wird.

8. Vorrichtung nach Anspruch 7, **dadurch gekennzeichnet, dass** am Kopfende des Gurtförderers (16a) eine Abwurftrommel (30) angeordnet ist, die aus dem Bereich der Kopfschurre (26) ausschwenkbar oder wegziehbar ist.

9. Vorrichtung nach Anspruch 6, **dadurch gekennzeichnet, dass** das teleskopierbare Fallrohr (27) aus Elementen besteht, die zylindrisch oder trichterförmig ausgebildet sind und in gerader Linie oder kaskadenförmig teleskopierbar zueinander angeordnet sind.

10. Vorrichtung nach Anspruch 1 oder 2, **dadurch gekennzeichnet, dass** der Schiffsbelader (5) einen um eine senkrechte Achse (5b) horizontal verschwenkbaren Oberbau (5a) mit einem Ausleger (9) besitzt.

11. Vorrichtung nach Anspruch 10, **dadurch gekennzeichnet, dass** der Ausleger (9) als Knickgelenkausleger ausgebildet ist, wobei der vordere (schiffsseitige) Teil des Auslegers um eine horizontale Achse (9a) schwenkbar ist, die im Bereich der dem Schiffsbelader zugewandten Schiffswand (37a) des zu beladenden Schiffes (37) liegt.

12. Vorrichtung nach Anspruch 10 oder 11, **dadurch gekennzeichnet, dass** der Ausleger (9) einen Gurtförderer (9b) trägt, der im Bereich der horizontalen Schwenkachse (9a) durch einen diesen Bereich überbrückenden Gurtbahnbogen (10) gestützt und geführt wird, der aus mehreren gegeneinander beweglichen schwenkbaren und verschiebbaren Einzelsegmenten (11,12,13) besteht.

13. Vorrichtung nach einem der Ansprüche 10 bis 12, **dadurch gekennzeichnet, dass** der Ausleger (9) eine Beladeschurre (14) trägt und dass die Beladeschurre mit einer Trimmeinrichtung (27a) zur seitlichen Ablenkung des Ladegutes versehen ist.

14. Vorrichtung nach Anspruch 13, **dadurch gekennzeichnet, dass** die Beladeschurre (14) über einen Parallelogrammlenker (15) senkrecht geführt ist.

15. Vorrichtung nach einem der Ansprüche 1 bis 14, **dadurch gekennzeichnet, dass** zur Zuführung des Fördergutes auf den Schiffsbelader (5) ein vom Land kommender Gurtförderer (32), ein Pier-Gurtförderer (33) und ein Bandschleifwagen (34) dienen.

16. Vorrichtung nach einem der Ansprüche 1 bis 15, **dadurch gekennzeichnet, dass** die Kopfstücke Betonköpfe sind oder aus Stahl bestehen.

## Claims

1. A device for offshore loading and/or unloading of ships for bulk materials, said device comprised of a steel gantry (1) which is configured as a multispan girder with a larg span and supported on the head pieces (3) of single pile foundations (2) and on the steel gantry (1) are one or more ship loaders (5) and/or ship unloaders longitudinally slidable on which at least one jib (9, 16, 35) is moveable.

2. A device as defined in claim 1, **characterized in that** said steel gantry (1) is configured in a truss design.

3. A device as defined in claim 1 or 2, **characterized in that** said ship loader and/or ship unloader is a coordinate device comprised of a jib (16, 35) which can be moved transversely to the longitudinal axis of the ship to be loaded (37) and on the roadway, which is positioned on the steel gantry (1).

4. A device as defined in claim 3, **characterized in that** said jib (16) is comprised of a longitudinally traversible counterweight (17).

5. A device as defined in claim 4, **characterized in that** said counterweight (17) is supported on rollers (18) and traversible together with the jib in opposite directions by means of drive pinions (19, 20) having different diameters, being arranged on a common shaft (21) and each engaging into a toothed rack or the like (24, 25).

6. A device as defined in any one of the preceding claims 3 to 5, **characterized in that** said jib (16) of said ship loader (5) at one free end is comprised of a charging chute retractable in vertical direction, said charging chute preferably being comprised of a head chute (26), a telescoping outlet pipe (27) or the like, and a guidance scaffold (28) which furthermore is accommodated within a pylon (29).

7. A device as defined in claim 6, **characterized in that** said head chute (26) is comprised of a hopper-shaped inflow area, a cover, inner guiding and deflector facilities, and an opening for lateral feed of the material to be conveyed which is preferably transported via a belt conveyor (16a).

8. A device as defined in claim 7, **characterized in that** at the head end of said belt conveyor (16a) a tripper pulley (30) is arranged that can be slewed out from the area of the head chute (26) and pulled-off.

9. A device as defined in claim 6, **characterized in that** the telescoping outlet pipe (27) is comprised of elements that are of a cylindrical or hopper-shaped configuration and that are arranged in a straight line or in form of a cascade and telescoping to each other.

10. A device as defined in claim 1 or 2, **characterized in that** said ship loader (5) is comprised of a superstructure (5a) including a jib (9) horizontally slewable around a vertical axis (5b).

11. A device as defined in claim 10, **characterized in that** said jib (9) is configured as a swan neck jib, with the front-end (ship-side) part of the jib being slewable around a horizontal axis (9a) lying in the area of the ship skin (37a) of the ship to be loaded (37) and facing the ship loader.

12. A device as defined in claim 10 or 11, **characterized in that** said jib (9) carries a belt conveyor (9b) which is supported and guided in the area of the horizontal slewing axis (9a) by a belt track arc (10) bridging this area and comprised of several single slewable and slidable elements (11, 12, 13) that can be traversed against each other.

13. A device as defined in any one of the preceding claims 10 to 12, **characterized in that** said jib (9) carries a charging chute (14), and that said charging chute is provided with a trim facility (27a) for lateral deflection of the loading goods.

14. A device as defined in claim 13, **characterized in that** said charging chute (14) is vertically guided via a parallelogram handlebar (15).

15. A device as defined in any of the preceding claims 1 to 14, **characterized in that** a land-bound belt conveyor (32), a pier conveyor belt (33) and a travelling tripper (34) serve for feeding the material to be conveyed onto the ship loader (5).

16. A device as defined in any of the preceding claims 1 to 15, **characterized in that** the head pieces are heads made of concrete or made of steel.

## Revendications

1. Dispositif pour le chargement et/ou le déchargement en mer de bateaux de marchandises en vrac avec un pont métallique (1) ayant la forme d'une poutre à travées multiples avec grande portée, ledit pont métallique étant monté sur les pièces de tête (3) de fondations sur pilotis (2) individuelles et avec un ou plusieurs chargeurs et/ou déchargeurs de bateaux (5) déplaçables sur le pont métallique (1) dans le sens longitudinal et sur lesquels au moins une flèche (9, 16, 35) est déplaçable.

2. Dispositif selon la revendication 1, **caractérisé en ce que** le pont métallique (1) est une construction en treillis.

3. Dispositif selon la revendication 1 ou 2, **caractérisé en ce que** le chargeur et/ou déchargeur de bateaux est un appareil à coordonnées avec une flèche (16, 35) qui est déplaçable transversalement à l'axe longitudinal du bateau à charger (37) et sur la voie de roulement située sur le pont métallique.

4. Dispositif selon la revendication 3, **caractérisé en ce que** la flèche (16) possède un contrepoids (17) déplaçable dans le sens de la longueur.

5. Dispositif selon la revendication 4, **caractérisé en ce que** le contrepoids (17) est monté sur des rouleaux (18) et est déplaçable avec la flèche dans des directions opposées au moyen de pignons (19, 20) qui ont des diamètres différents, sont montés sur un arbre commun (21) et attaquent chacun dans une crémaillère ou autre (24, 25).

6. Dispositif selon une des revendications 3 à 5, **caractérisé en ce que** la flèche (16) du chargeur de bateaux (5) présente à une extrémité libre une goulotte de chargement rétractable dans le sens vertical et est constituée de préférence d'une goulotte de tête (26), d'un tube de descente télescopique (27) ou autre et d'un cadre de guidage (28) qui est lui-même logé de préférence à l'intérieur d'un pylône (29).

7. Dispositif selon la revendication 6, **caractérisé en ce que** la goulotte de tête (26) possède une zone d'alimentation en forme d'entonnoir, un couvercle, des chicanes et déflecteurs et une ouverture pour l'amenée latérale des matières à transporter lesquelles sont acheminées de préférence au moyen d'un convoyeur à courroie (16a).

8. Dispositif selon la revendication 7, **caractérisé en ce qu'**un tambour de jetée (30) est monté à l'extrémité de tête du convoyeur à courroie (16a) qui peut être pivoté et enlevé de la zone de la goulotte de tête (26).

9. Dispositif selon la revendication 6, **caractérisé en ce que** le tube de descente télescopique (27) est constitué d'éléments de forme cylindrique ou ayant la forme d'un entonnoir et qui sont ordonnés en ligne droite ou sont télescopiques en forme de cascades les uns par rapport aux autres.

10. Dispositif selon la revendication 1 ou 2, **caractérisé en ce que** le chargeur de bateaux (5) possède une superstructure (5a) pivotable horizontalement autour d'un axe vertical (5b) ladite superstructure étant équipée d'une flèche (9).

11. Dispositif selon la revendication 10, **caractérisé en ce que** la flèche (9) est une flèche avec articulation, la partie avant (côté bateau) de la flèche étant pivotable autour d'un axe horizontal (9a) qui se trouve dans la zone de la paroi (37a) du bateau à charger faisant face au chargeur de bateaux.

12. Dispositif selon la revendication 10 ou 11, **caractérisé en ce que** la flèche (9) est équipée d'un convoyeur à courroie (9b) qui est soutenu et guidé dans la zone de l'axe de pivotement horizontal (9a) par un arc de voie de courroie (10) lequel est constitué de plusieurs segments individuels (11, 12, 13) mobiles, pivotables et déplaçables les uns contre les autres.

13. Dispositif selon une des revendications 10 à 12, **caractérisé en ce que** la flèche (9) est équipée d'une goulotte de chargement (14) et que la goulotte de chargement est équipée d'un dispositif d'ajustage (27a) pour la déviation latérale des matières à transporter.

14. Dispositif selon la revendication 13, **caractérisé en ce que** la goulotte de chargement (14) est guidée verticalement via une bielle parallélogramme.

15. Dispositif selon une des revendications 1 à 14, **caractérisé en ce qu'**un convoyeur à courroie (32) terrestre, un convoyeur à bande de quai (33) et un chariot de jetée (34) sont utilisés pour amener les matières à transporter sur le chargeur de bateaux (5).

16. Dispositif selon une des revendications 1 à 15, **caractérisé en ce que** les pièces de tête sont des têtes en béton ou en acier.
